# FASCICULE DE BREVET EUROPEEN

(11) **EP 0 918 660 B1**
(45) Date de publication et mention de la délivrance du brevet: **31.10.2001**
(21) Numéro de dépôt: 97937634.0
(22) Date de dépôt: 19.08.1997
(51) Int. Cl.: B60P 3/08

(54) **RANCHER PORTEUR A MOYEN DE LEVAGE INTEGRE ET ENSEMBLE PORTEUR CONSTITUE D'AU MOINS UN COUPLE DE DEUX RANCHERS LIES FONCTIONNELLEMENT ENTRE EUX**
TRAGENDE RUNGE MIT INTEGRIERTER HUBEINRICHTUNG UND TRAGENDER AUFBAU BESTEHEND AUS MINDESTENS EINEM PAAR FUNKTIONELL UNTER SICH VERBUNDENER RUNGEN
CARRIER STANCHION WITH IN-BUILT LIFTING MEANS AND CARRIER ASSEMBLY CONSISTING OF AT LEAST A PAIR OF STANCHIONS FUNCTIONALLY LINKED

(30) Priorité: 20.08.1996 FR 9610384
(43) Date de publication de la demande: 02.06.1999
(73) Titulaire: Lohr Industrie, 67980 Hangenbieten (FR)
(72) Inventeur: ANDRE, Jean-Luc, F-67210 Obernai (FR)
(74) Mandataire: Metz, Paul
(86) Numéro de dépôt international: FR9701497
(87) Numéro de publication internationale: WO9807593

(56) Documents cités:
- EP-A- 0 540 320
- EP-A- 0 567 261
- US-A- 3 021 021

## Description

L'invention se rapporte à un rancher porteur déplaçable comprenant un moyen de levage intégré destiné à permettre le transport d'une charge à hauteur variable et le plein accès latéral ainsi qu'une transformation rapide d'un véhicule de fret général en un véhicule de transport spécifique et inversement.

L'invention se rapporte également à un portique formé de deux ranchers déplaçables à moyen de levage intégré placés en regard et liés fonctionnellement entre eux notamment par une structure transversale porteuse de la charge.

Les véhicules utilitaires couverts le sont par une carrosserie ou par une ou des bâches. Ces bâches peuvent comporter des faces latérales ouvrables à la manière de rideaux coulissants. Ces rideaux de faces latérales sont suspendus à la rive supérieure de carrosserie qui est supportée à intervalles par des poteaux appelés ranchers.

Ces ranchers ne constituent que des supports passifs dont la fonction se limite au simple soutien de la rive supérieure.

Des ranchers peuvent également être utilisés pour maintenir des ridelles, des parois amovibles, de planches de rive ou tout autre élément de protection.

Le véhicule ainsi équipé ne peut devenir polyvalent, c'est-à-dire recevoir aussi des charges spéciales en raison du manque de structures adaptée permettant de les supporter.

L'accès pour le chargement ou le déchargement latéral nécessite une opération de dépose des ranchers pour leur enlèvement ou de désolidarisation pour leur déplacement.

Par ailleurs, et toujours pour des questions de rentabilité d'un investissement en véhicules porteurs routiers les transporteurs souhaitent pouvoir avec le même véhicule porteur passer rapidement d'un type de chargement à un autre.

EP-A- 540320 divulgue un rancher selon le préambule de la revendication 1.

L'invention a pour but de fournir un équipement de carrosserie permettant de transformer rapidement et simplement un véhicule transporteur de marchandises en un véhicule polyvalent et utilisable en plus pour le transport de charges spéciales par le simple remplacement des ranchers classiques par des poteaux à moyen de levage intégré, interchangeables avec ces ranchers au moins en ce qui concerne l'épaisseur totale afin de ne pas réduire la largeur utile des véhicules ou conteneurs.

De façon générale, l'invention permet de passer d'une utilisation spécifique à une autre, ou d'une utilisation spécifique à un transport classique de marchandises et inversement.

Dans une de ses applications, l'invention permet de réaliser un véhicule porte-voitures désignant également semi-remorque, conteneur ou autre à partir d'un véhicule de fret général et de le rendre transformable rapidement de l'un dans l'autre.

Elle a également pour but, par le caractère déplaçable des ranchers, de permettre de conserver en cas de besoin, le plein accès latéral par les faces longitudinales. En effet, les ranchers peuvent dégager les faces longitudinales en étant déplacés à l'une et/ou à l'autre des extrémités.

En mode de transport de véhicule l'invention permet d'adapter la distance entre deux ranchers successifs à l'empattement des véhicules transportés.

A cette fin l'invention se rapporte à un rancher porteur et à un ensemble porteur formé d'au moins un couple de deux ranchers homologues disposés en vis à vis transversal par rapport au véhicule et reliés fonctionnellement entre eux.

Chaque rancher déplaçable longitudinalement et porteur se caractérise par les moyens essentiels suivants:
. un moyen supérieur de déplacement coopérant avec une structure linéaire de déplacement solidaire du véhicule sur laquelle est monté à translation le rancher avec un jeu fonctionnel,
. un corps de forme générale rectiligne monté à translation sur la structure linéaire de déplacement et renfermant :
   . un mécanisme de levage comportant un élément porteur mobile en translation verticale,
   . une interface avec la charge ou avec un moyen de support de la charge solidaire ou reliée à l'élément porteur du mécanisme de levage,
. un moyen inférieur d'immobilisation en position de travail le long de la carrosserie ou du châssis du véhicule,
. un moyen supérieur d'immobilisation en position supérieure.

Chaque couple de ranchers dont les ranchers sont disposés en vis à vis transversal et constitués en portique se caractérise en ce que les ranchers sont reliés fonctionnellement entre eux par une liaison de synchronisation de mouvement, la charge étant portée par des supports individuels ou par une structure transversale porteuse reliant entre elles les interfaces des éléments porteurs mobiles correspondants de chaque rancher.

Selon la variante principale, la structure porteuse est transversale au plan porteur du véhicule et relie les deux ranchers d'un même couple entre eux.

L'invention concerne également deux couples de ranchers constitués chacun en portique et reliés entre eux par une structure porteuse commune.

On comprend tout l'intérêt de l'invention qui permet de rendre les véhicules équipés de ces ranchers ou de ces ensembles porteurs constitués à partir de ranchers, transformables rapidement d'un type de véhicule de transport spécifique à une charge dans un autre type commun ou spécifique à une autre charge.

A titre d'avantage principal, l'invention permet de disposer d'un véhicule porteur pour charge spéciale sans passer par des modifications longues et coûteuses et tout en conservant la carrosserie d'origine.

Ce besoin se fait sentir avec une plus grande acuité dans le cas de transporteurs occasionnels de voitures ou de véhicules neufs, usagés ou accidentés.

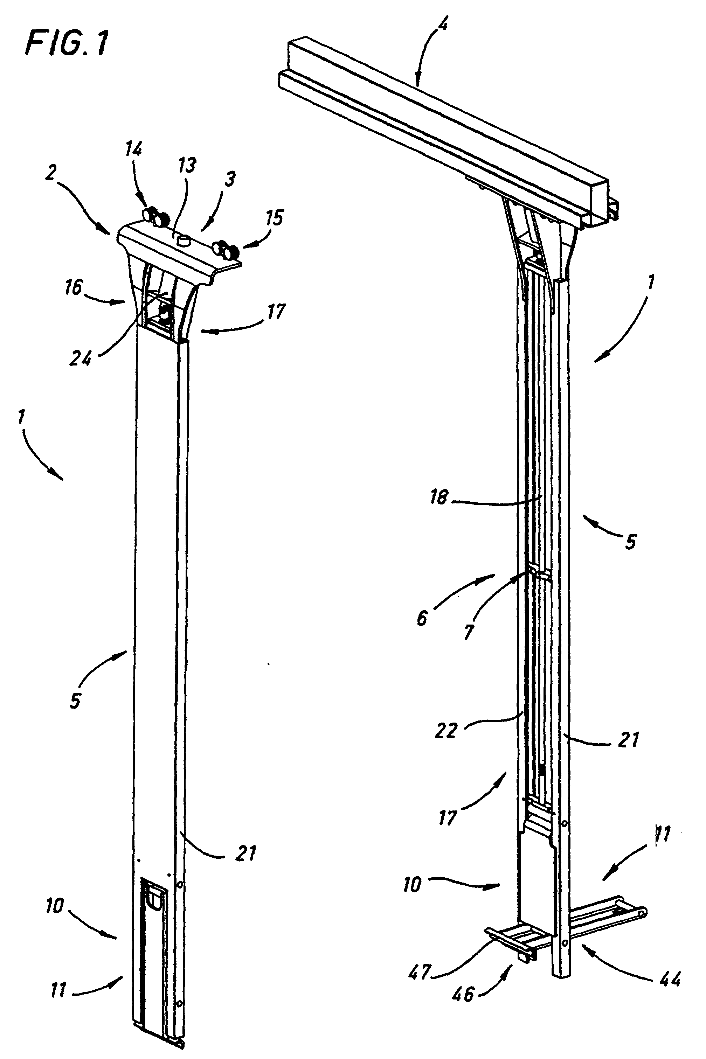

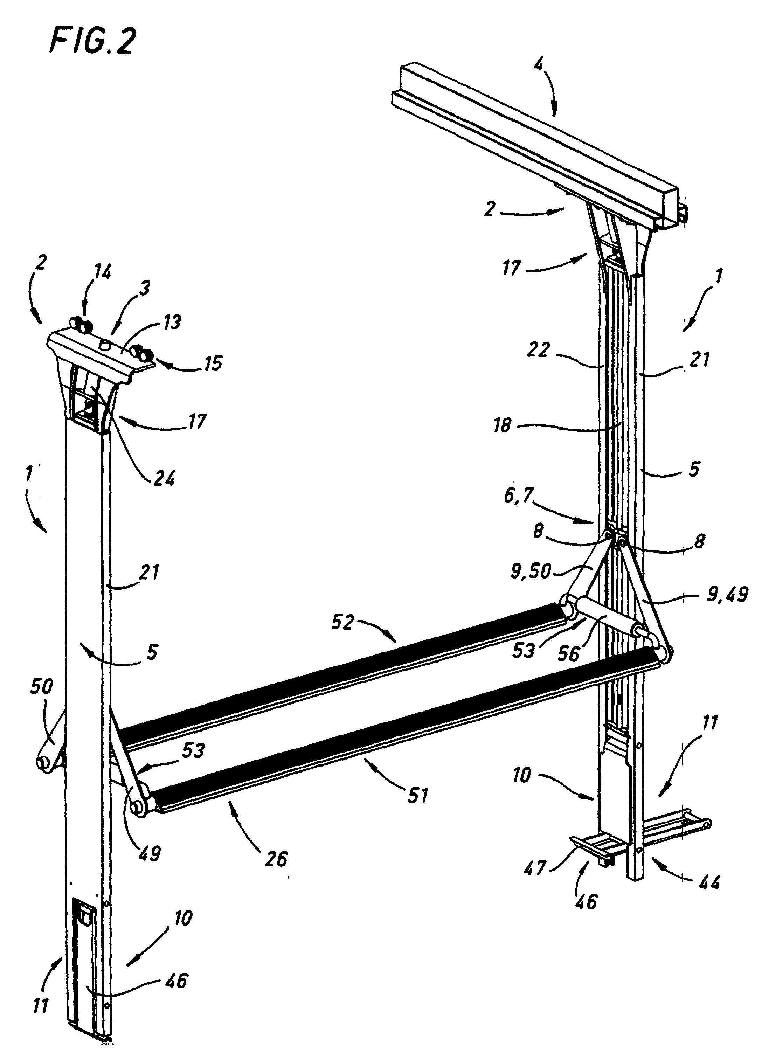

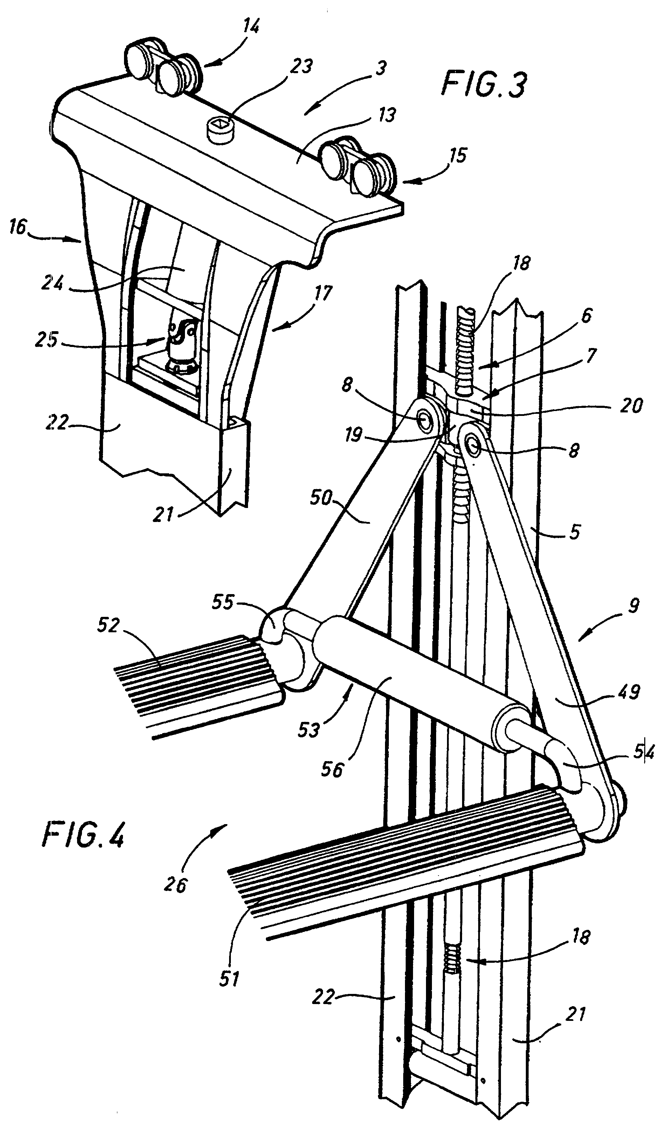

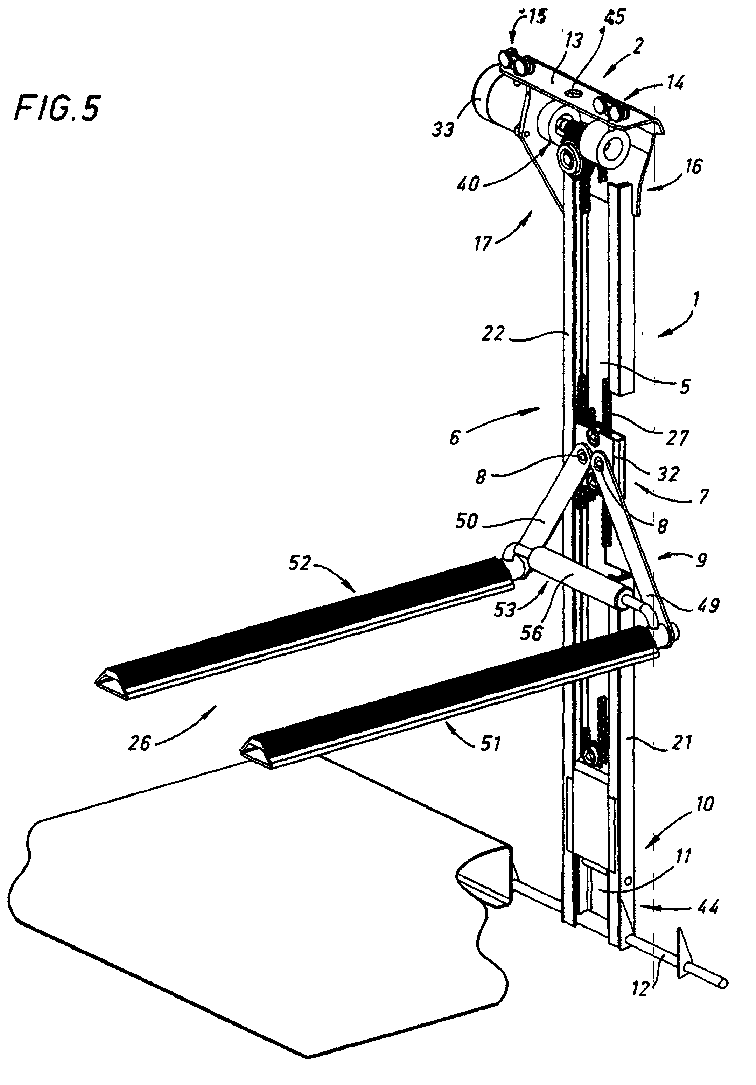

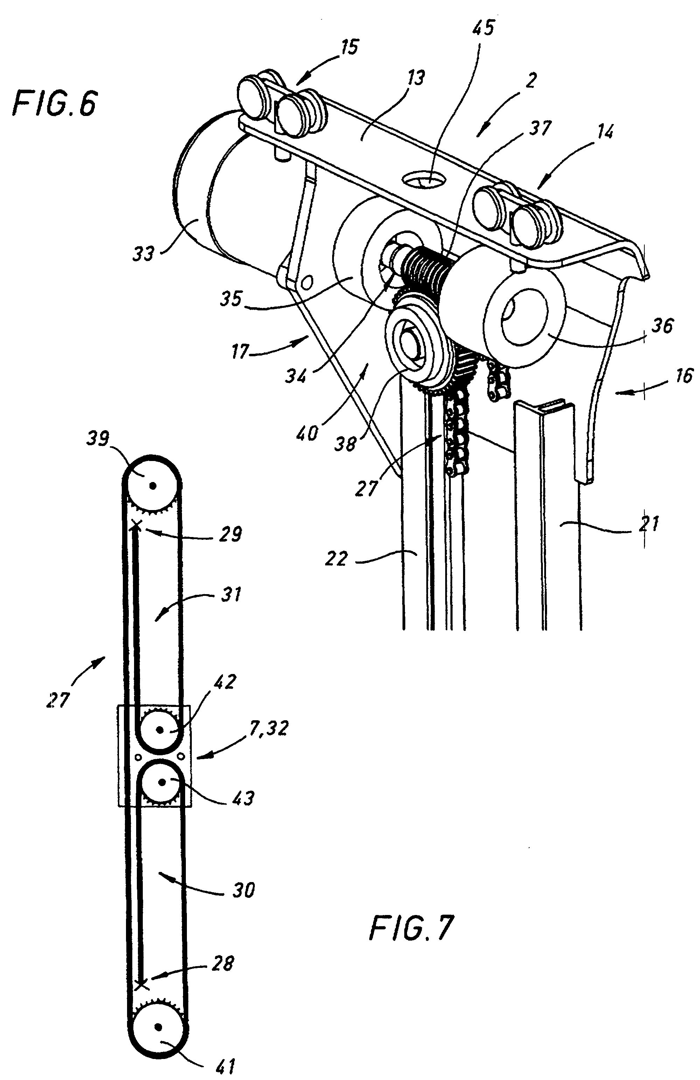

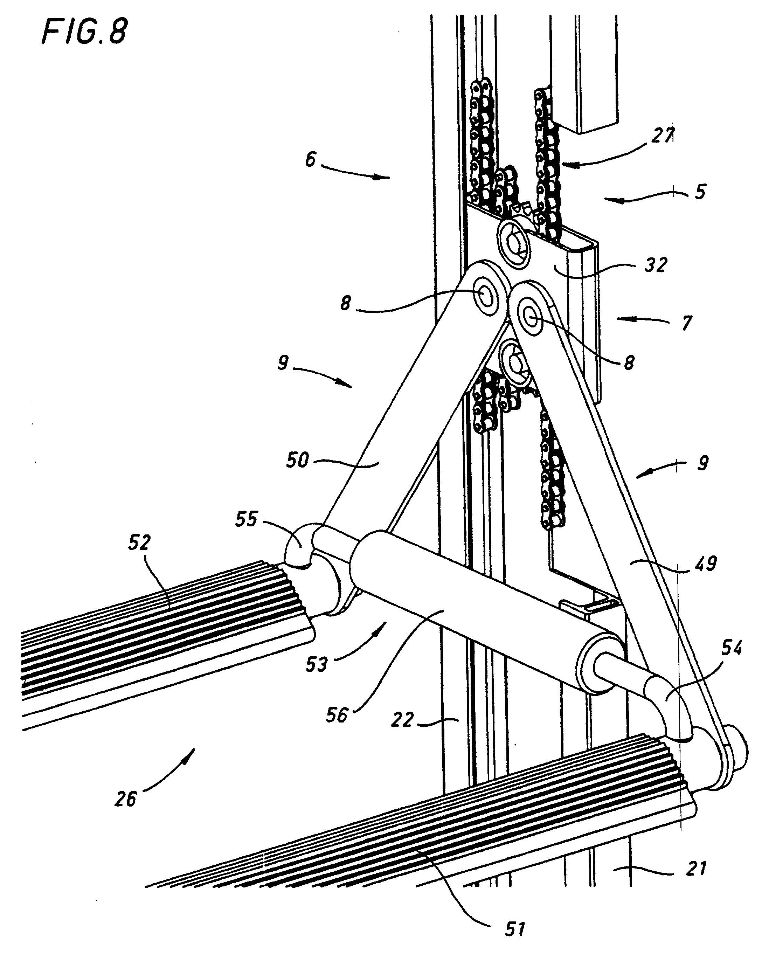

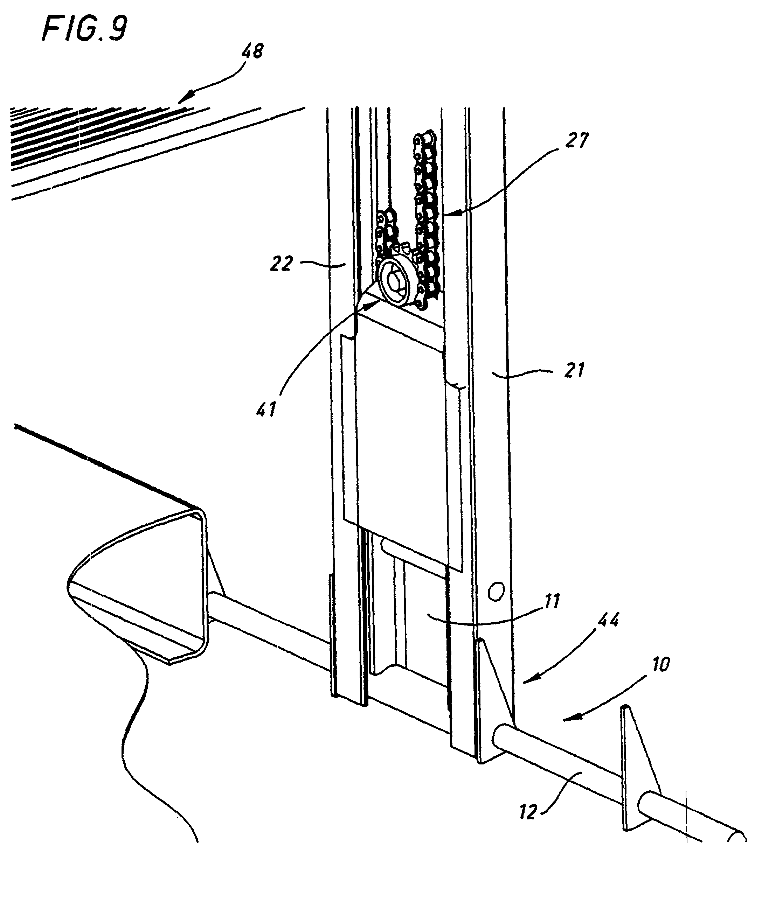

D'autres caractéristiques et avantages de l'invention apparaîtront à la lecture de la description qui suit donnée à titre d'exemple en référence aux dessins accompagnants dans lesquels :
. la figure 1 est une vue générale en perspective montrant un premier poteau déplaçable présenté par sa face avant et un deuxième poteau présenté par sa face arrière, les ranchers étant réalisés conformément à une première variante à vis et écrou ;
. la figure 2 est une vue générale en perspective montrant un couple de ranchers réunis par une structure transversale porteuse ;
. les figures 3 et 4 sont des vues de détail en perspective représentant respectivement la partie supérieure d'un des ranchers et la liaison entre l'écrou et la structure transversale porteuse ;
. la figure 5 est une vue générale en perspective montrant en position de travail un poteau correspondant à une version à chaîne ;
. la figure 6 est une vue de détail en perspective représentant la partie supérieure d'un des ranchers dans laquelle on peut voir la prise de mouvement de la chaîne ;
. la figure 7 est une vue schématique montrant le circuit de la chaîne moufflée ;
. les figures 8 et 9 sont des vues de détail en perspective représentant respectivement pour la première la liaison entre le bloc de translation et la structure transversale porteuse et pour la second l'extrémité inférieure du rancher déplaçable.

On décrira tout d'abord les ranchers seul dans leurs caractéristiques générales puis l'une et l'autres des variantes représentées.

Le rancher déplaçable conforme à l'invention se compose des moyens généraux suivants.

Un corps 1 de forme générale rectiligne comprend à son extrémité supérieure 2 un moyen supérieur de déplacement 3 le long d'une structure supérieure linéaire longitudinale 4 de déplacement sur laquelle il est monté à translation, et une partie rectiligne 5 renfermant un moyen de levage et d'abaissement 6 à élément porteur mobile 7 solidaire ou relié par une interface 8 à la charge ou à un support individuel 9 de charge, et finalement à son extrémité inférieure 10 un moyen inférieur d'immobilisation 11 sur une bordure longitudinale 12 de la carrosserie ou du châssis.

Le moyen supérieur de déplacement 3 est réalisé selon les variantes représentées sous la forme d'un chariot 13 pourvu de couples 14 et 15 de galets ou de roulettes se déplaçant le long de la structure supérieure linéaire 4, par exemple du type monorail. Cette structure linéaire 4 est solidaire de la carrosserie du véhicule. Le rancher est suspendu à cette structure linéaire par le moyen supérieur de déplacement 3 avec un certain jeu fonctionnel. Le chariot 13 se transforme vers le bas en une partie coudée 16 utilisée pour la prise et la transmission du mouvement d'entraînement du moyen de levage 6 comme on le verra ci-après. La partie coudée 16 se confond ensuite avec la partie rectiligne verticale 5 renfermant le moyen de levage et d'abaissement 6 pour le levage et l'abaissement de la charge et sa mise en position. Ce moyen de levage présente un mécanisme d'entraînement 17 de l'élément porteur mobile 7. Ce dernier reçoit de façon solidaire une, ou est relié à l'interface 8 qui constitue la liaison avec la charge ou avec un support individuel 9 porteur de la charge.

L'élément porteur mobile 7 et le mécanisme d'entraînement 17 peuvent être réalisés sous différentes formes. Selon la première variante, il s'agit d'une vis 18 qui entraîne un écrou porteur 19 monté sur cette vis en translation le long du rancher par la rotation de la vis. Préférentiellement, l'écrou porteur 19 est monté flottant dans un bloc de translation 20 formant cage d'immobilisation en rotation par rapport à la vis et assurant la fonction de curseur par ses chants pour le déplacement le long de deux glissières en regard 21 et 22 conformées dans les structures latérales de flanc de la partie rectiligne 5 ou tout autre moyen équivalent.

Sur le plan technologique, la vis est de préférence du type irréversible montée sur palier à chacune de ses extrémités et entraînée en rotation par un moyen moteur extérieur en prise cinématique par un carré 23 ou autre, au voisinage du chariot de déplacement 13. Le mouvement rotatif est transmis à la vis 18 par un arbre court incliné 24, monté sur cardans 25.

Pour éviter le flambage de la vis, on peut être amené à la suspendre par son extrémité supérieure.

L'élément porteur 7 mobile en translation verticale est la cage 20 dans laquelle l'écrou de translation 19 est monté flottant permettant un jeu fonctionnel entre la cage et l'écrou de la vis du moyen de levage.

Ce jeu fonctionnel assure la sécurité du montage et des pièces dans le cas d'à-coups ou de forces ou de résistance anormales dans la transmission et la conversion des mouvements.

L'élément porteur 7 mobile en translation verticale est solidaire de ou relié à l'interface 8 supportant directement la charge ou reliée au support individuel 9 porteur de la charge.

On peut imaginer de nombreux types de supports individuels 9. Il peut s'agir soit de supports simples : équerres, platines ou autres en prise directe avec la charge ou avec un support intermédiaire individuel portant la charge, soit de supports plus élaborés à articulation simple ou double ou des supports spécifiques simples doubles ou complexes par exemple des pinces, des bras doubles ou autres supports individuels par exemple spécifiques au transport de véhicules.

On peut également envisager comme on le décrira ci-après, une liaison par une structure transversale porteuse 26 simple ou spécialisée : barre, nacelle, panier ou autres qui nécessite deux ranchers en regard, cette structure pouvant être considéré comme la prolongation-jonction des supports individuels 9 de chaque ranchers.

Dans le cas du transport de véhicules, ces supports individuels en regard ou les structure transversales porteuses reçoivent les roues du véhicule à transporter.

La deuxième variante représentée sur les figures 5 à 9 comporte plusieurs moyens identiques et quelques moyens fonctionnellement équivalents par rapport à la variante précédente.

Selon la deuxième variante, les moyens de déplacement 3 le long de la structure linéaire supérieure 4 sont également réalisés sous la forme d'un chariot 13 à deux couples de roulettes ou de galets 14 et 15 en prise sur un chemin de roulement conformé en rail ou en autres formes fonctionnellement équivalentes. On peut par exemple utiliser un chemin de roulement du type monorail tubulaire à section fermée et à fente inférieure dans lequel circulent les roulettes ou les galets et sur lequel est monté à translation le corps rectiligne 1 du rancher avec un jeu fonctionnel.

Le moyen de levage se compose d'un ensemble à chaîne 27 moufflée à deux extrémités fixes (représentées par une croix sur la figure 7) inférieure 28 et supérieure 29 formant une boucle inférieure 30 et une boucle supérieure 31 sur lesquelles est monté l'élément porteur mobile 7 sous.la forme d'un bloc de translation 32 mobile verticalement le long des flancs du corps rectiligne 1.

Ces flancs conformés en glissière selon 21 et 22, présentent par exemple chacun une section en U couché disposée en regard l'une de l'autre. Les chants du bloc de translation 32 sont prévus pour s'adapter dans ces glissières et y coulisser avec un certain jeu fonctionnel à la manière d'un curseur.

Dans cette version, le mécanisme d'entraînement 17 de l'élément porteur mobile 7 est générateur de la force motrice. Il se compose d'un moteur latéral 33 commandé en synchronisme avec le ou les moteur(s) correspondant(s) des autres ranchers moteur dont l'arbre de sortie 34 est supporté par deux paliers-roulements 35 et 36 entre lesquels cet arbre est conformé en vis sans fin 37 en prise directe sur un pignon 38 solidaire d'une roue dentée supérieure motrice 39 portant et entraînant la chaîne d'entraînement 27. Cet ensemble constitue un moto-réducteur irréversible 40.

Cette chaîne d'entraînement 27 passe autour de la roue dentée supérieure 39 et d'une roue dentée inférieure de renvoi 41. Elle forme la boucle supérieure 31 s'étendant entre la roue dentée supérieure 39, une roue dentée supérieure 42 du bloc de translation 32 et son extrémité fixe supérieure 29. Cette chaîne forme également la boucle inférieure 30 qui s'étend entre la roue dentée inférieure 41, une roue dentée inférieure 43 du bloc de translation 32 et son extrémité fixe inférieure 28. Cette conformation réalise un montage du type mouffle.

A la manière d'une mouffle, les mouvements de rotation dans un sens ou dans un autre de la roue motrice 39 sous l'effet du moto-réducteur 40 provoquent la montée ou la descente du bloc de translation 32 le long de la partie rectiligne 5.

En vue de l'immobilisation de chaque rancher en position de travail, chaque rancher possède à son extrémité supérieure et à son extrémité inférieure un moyen d'immobilisation 44,11.

Le moyen d'immobilisation supérieure est réalisé par exemple sous la forme d'un pion (non représenté) prévu sur la structure linéaire supérieure et une ouverture 45 dans la plaque de châssis du chariot 13 ou inversement.

Cette caractéristique existe sur la première variante bien que non représentée sur les figures.

Chaque rancher possède à son extrémité inférieure 10 un moyen d'immobilisation inférieure en position de travail sur une bordure solidaire du châssis ou de la carrosserie par exemple le moyen 11 sur la bordure 12 comme déjà indiqué ci-dessus.

Le choix du moyen d'immobilisation supérieure est compatible avec la cinématique du moyen d'immobilisation inférieure. Ainsi, l'immobilisation supérieure résulte de l'engagement du pion dans cette ouverture provoqué par le mouvement de montée du corps du rancher suite au verrouillage inférieur.

Les moyens d'immobilisation supérieure et inférieure coopèrent en vue d'une immobilisation totale en position de travail commandée de préférence par le seul et même mouvement de verrouillage de l'extrémité inférieure.

Dans la forme de réalisation représentée (figure 2) il s'agit d'une poignée pivotante 46.

Cette poignée 46 est constituée d'un cadre pivotant autour d'un axe transversal au rancher et prolongé par un organe de verrouillage sous la forme par exemple d'un tube cylindrique 47 ouvert selon son grand axe venant en prise sur une barre.

Chaque poignée pivote entre deux positions limites :
. une position horizontale de déverrouillage du rancher dans laquelle elle s'étend généralement transversalement à celui-ci. Dans cette position, les ranchers peuvent être déplacés le long du châssis du véhicule jusqu'à la position voulue ;
. une position verticale d'immobilisation-verrouillage du rancher dans laquelle la poignée s'efface dans un logement de réception prévu à l'intérieur du rancher à sa base, et est forcée par l'intermédiaire de son extrémité de verrouillage contre un élément longitudinal d'appui, barre ou autre fixé sur les bords de rive du châssis du véhicule.

La poignée bascule et est maintenue dans la position d'immobilisation du rancher sous l'effet de la force de pression procurée par le levier de la poignée ou par des forces élastiques de rappel.

Pour des raisons de sécurité, on peut prévoir un verrouillage mécanique supplémentaire.

Ce mouvement de verrouillage provoque l'engagement du pion d'immobilisation dans l'ouverture correspondante 45.

Bien entendu, d'autres formes de réalisation des moyens d'immobilisation sont possibles telles que des fermetures à leviers ou des dispositifs à crans.

L'invention se rapporte également à un ensemble porteur formé d'au moins un couple de ranchers constitués en portique. Chaque couple lorsqu'il est indépendant peut être constitué et immobilisé en des endroits quelconques ou spécifiques le long des faces longitudinales d'un véhicule porteur. Les couples lorsqu'ils sont dépendants l'un de l'autre c'est-à-dire lorsqu'ils sont réunis longitudinalement par une structure porteuse 26, un plateau 48, une plate-forme ou autre sont placés ou déplacés ensemble. La distance longitudinale séparant les ranchers situés d'un même côté est déterminée par la longueur de la structure porteuse.

Dans le cas d'un ensemble porteur constitué en portique, cet ensemble est formé d'un couple de deux ranchers porteurs décrits précédemment disposés en vis-à-vis transversal de chaque coté du châssis et reliés fonctionnellement entre eux par synchronisation de mouvement et éventuellement réunis physiquement entre eux par une structure transversale porteuse de la charge. Cet ensemble du type portique est destiné d'une part à mettre en position et à porter une charge spécifique et d'autre part à permettre la transformation rapide du véhicule ainsi équipé en un véhicule de transport d'un autre type de charge.

Dans une de ses applications, l'invention permet de réaliser à partir d'un véhicule de fret général un véhicule porte-voitures, transformable rapidement en un autre type de véhicule de transport par exemple de transport de fret général.

Dans ce cas, l'ensemble porteur composite constitué en portique et déplaçable le long du véhicule se compose d'une structure transversale porteuse maintenue par deux ranchers de soutien-levage formant ensemble un portique dont une forme préférés d'exécution est représentée sur les figures 2 et 5.

Les ranchers peuvent également ne comporter que des supports individuels 9 en regard.

Chaque portique se compose des moyens essentiels suivants :
. deux ranchers de soutien homologues déplaçables à l'état déverrouillés en couple ou indépendamment l'un de l'autre le long du véhicule ;
. deux couples de galets ou de roulettes 14,15 fixés à l'extrémité supérieure de chacun des ranchers et assujettis en direction par une structure linéaire supérieure 4 réalisée par exemple sous la forme d'un profilé supérieur formant monorail ;
. deux moyens d'immobilisation inférieure 11 et supérieure 44 dans une position de travail réalisés par exemple sous la forme de deux poignées pivotantes 46 de verrouillage des ranchers dans la position recherchée le long du châssis du véhicule ;
. deux moyens d'immobilisation supérieure par exemple sous la forme d'un pion s'engageant dans une ouverture ;
. une structure transversale porteuse 26 commune ou deux supports individuels 9 en regard, amovible(s) ou effaçable(s), mobile(s) en translation verticale et en pivotement par rapport aux deux ranchers ;
. une liaison de synchronisation de mouvement de levage entre les deux ranchers du portique.

Cet ensemble porteur composite du type portique est formé par l'association de deux ranchers tels que décrits ci-dessus et d'une liaison transversale, par exemple une structure transversale porteuse 26 maintenue par les deux éléments porteurs mobiles 7 des deux ranchers, chacun de ces ranchers étant suspendu à déplacement le long d'une structure linéaire supérieure 4 par exemple un profilé du type monorail.

Chaque rancher renferme un moyen de levage par exemple à vis motrice 18 ou à chaîne moufflée 27 sur laquelle est monté un bloc de translation et son interface 8. Le moyen de levage 6 est unique par rancher, et les deux moyens de levage 6 de deux ranchers homologues sont entraînés en synchronisation de mouvement ou couplés par une même commande à force motrice unique. La force motrice est fournie aux vis ou aux chaînes cardan par des moteurs individuels à énergie électrique ou fluidique supérieurs ou inférieurs ou une ligne de distribution du mouvement d'entraînement à travers une prise de mouvement sélective ou commandée.

Les moyens moteurs peuvent être déplaçables ou amovibles. Ainsi, on peut utiliser un nombre de moyens moteurs inférieur au nombre de ranchers, par exemple deux moteurs en prise sur chacun des rancher que l'on déplacera pour actionner les portiques les uns après les autres. L'avantage de cette variante est de pouvoir ranger ces moteurs ou de les accoupler en bas des ranchers et de diminuer le coût total de l'installation.

Les deux ranchers homologues d'un même portique montés à translation le long de la structure linéaire longitudinale 4 sont déplacés individuellement le long des profilés supérieurs vers l'avant ou l'arrière du châssis du véhicule soit manuellement soit sous l'effet d'une force motrice propre ou fournie par le dispositif moteur de la structure transversale mobile.

En vue de son immobilisation en position de travail, chaque rancher possède à son extrémité supérieure et à son extrémité inférieure un moyen d'immobilisation 44 et 11 déjà décrits ci-dessus. Ces moyens d'immobilisation garantissent une position fixe de chaque rancher en au moins un endroit prédéterminé le long du châssis.

La structure transversale porteuse 26 est de conception classique ou de caractéristiques particulières. Chaque moyen de levage est un ensemble formé par un bloc de translation mobile le long du corps rectiligne par exemple la cage d'un écrou de translation ou un curseur ou bloc de translation entraîné par la vis ou la chaîne et relié à la structure transversale porteuse par l'intermédiaire de l'interface 8 sous la forme d'une fourche avec articulation de pivotement-soutien ou par des axes de liaison.

La structure transversale est susceptible de mouvements composés en basculement et en déplacement par rapport à ses deux ranchers de soutien. Pour le dégagement total du volume de chargement, la structure transversale porteuse peut être enlevée ou abaissée jusqu'au sol, voire temporairement dégagée afin de laisser le volume intérieur libre pour un transport de fret général.

La structure transversale porteuse amovible ou déplaçable est réalisée par exemple sous la forme générale de celle représentée sur les figures 2, 4, 5 7 et 8.

Elle présente à chacune de ses extrémités une liaison articulée formée de deux biellettes obliques 49 et 50 plates et de faible épaisseur, disposées en "V" renversé. Chaque biellette est articulée à pivotement par son extrémité supérieure sur l'extrémité de l'élément porteur mobile de chaque rancher par un axe formant entretoise 8 et par son extrémité inférieure sur l'extrémité d'un des deux éléments constituant la structure transversale porteuse.

Conformément à la réalisation représentée, la structure transversale porteuse se compose de deux traverses parallèles 51 et 52 en forme de barres dont les extrémités sont montées à pivotement sur le extrémités des biellettes. Les traverses parallèles 51 et 52 sont maintenues à distance constante l'une de l'autre par une entretoise amovible 53, éventuellement réglable, réalisée dans l'exemple représenté sous forme d'une tige à extrémités coudées 54,55 venant se loger dans des ouvertures prévues à l'extrémité des traverses.

Pour des raisons de largeur utile ces biellettes sont plates et de faible épaisseur. De ce fait, il s'avère nécessaire de prévoir un moyen additionnel pour reprendre les efforts transversaux et éventuellement limiter les débattements.

De façon inventive, ce moyen additionnel consiste en un rouleau 56 qui est monté à rotation sur la tige-entretoise. Les distances et l'épaisseur du rouleau sont prévues telles pour que le rouleau soit en contact permanent ou occasionnel avec la surface de face avant et plus particulièrement les retours plats de face avant des ailes de flanc de chaque corps rectiligne de chaque rancher qu'il utilise comme piste de roulement. Bien entendu, d'autres moyens équivalents peuvent être prévus pour limiter et reprendre le efforts latéraux.

Pour la transformation de la configuration de fret général à celle de transport de charge spécifique on déplace individuellement chaque rancher en amenant l'un en face de l'autre en un endroit prédéterminé du châssis du véhicule. On immobilise ceux-ci en position puis on constitue le portique en montant la structure transversale porteuse par exemple en reliant les traverses porteuses 51,52 aux biellettes puis en posant les entretoises.

Lors du passage inverse de transformation, on enlève d'abord les entretoises, on décroche les barres puis, soit on enlève les biellettes, soit on les laisse pendre et on abaisse l'élément mobile du rancher au niveau du plancher. Les biellettes 49 et 50 s'écartent au contact du plancher et viennent s'effacer en position horizontale le long des flancs intérieurs du véhicule.

Ces biellettes 49 et 50 étant de faible épaisseur, elles peuvent rester suspendues le long du corps du rancher.

L'invention couvre également l'association de deux couples de ranchers par une structure porteuse commune telle une plate-forme ou un plan de chargement ou bien un plateau individuel 48 porteur d'un véhicule routier. Cette structure est mobile en élévation et en abaissement par les moyens de levage propres à chaque poteau. Elle peut être inclinable par le choix d'articulations appropriées la reliant à chaque rancher et par une commande synchronisée des moyens de levage.

L'invention permet de transformer un véhicule porteur et de le rendre apte à tous les types de chargements et notamment aux charges spéciales moyennant une opération simple, rapide et peu onéreuse à partir d'un véhicule de fret général éventuellement déjà pourvu de ranchers classiques. Le véhicule ainsi équipé peut se modifier et s'adapter à tous les types de chargements et notamment aux charges spéciales par de simples mouvements de déplacement et de mise en place de moyens mobiles et/ou de structures amovibles.

Les moyens moteurs et leur logique de commande peuvent être embarqués ou installés sur la base de chargement du véhicule équipé conformément à l'invention.

## Revendications

1. Rancher pour véhicule, formé d'un corps rectiligne (1) mobile et guidé par son extrémité supérieure (2) par un moyen supérieur de déplacement (3) le long d'une structure linéaire supérieure longitudinale (4) solidaire de la carrosserie ou du châssis du véhicule et immobilisable par un moyen d'immobilisation dans une position le long de cette carrosserie ou de ce châssis **caractérisé en ce que** le moyen d'immobilisation (11) dans la position de travail est un moyen d'immobilisation en un endroit quelconque ou prédéterminé sur la totalité de la course du corps rectiligne (1) le long de cette carrosserie ou de ce châssis, et **en ce que** le corps rectiligne (1) du rancher renferme un moyen (6) de levage, d'abaissement et de soutien de la charge à transporter, ledit moyen (6) étant entraîné par une force motrice pour le déplacement d'un élément porteur mobile (7) guidé en translation le long du corps rectiligne (1) et immobilisable dans une position quelconque dans laquelle il soutient la charge.

2. Rancher selon la revendication 1 **caractérisé en ce que** le corps rectiligne (1) renfermant le moyen de levage et d'abaissement (6) présente :
. une extrémité supérieure déplaçable (2) le long de la structure linéaire supérieure longitudinale (4) montée sur la carrosserie par des moyens de déplacement,
. une partie intermédiaire rectiligne (5) le long de laquelle se déplace verticalement l'élément porteur mobile (7),
. une extrémité inférieure (10) comportant le moyen d'immobilisation (11) en une position quelconque sur une bordure longitudinale (12) inférieure de la carrosserie ou du châssis.

3. Rancher selon la revendication 1 ou 2 **caractérisé en ce que** l'extrémité supérieure déplaçable (2) est immobilisable le long de la structure linéaire supérieure longitudinale (4) par l'engagement d'un pion dans une ouverture (45) suite au mouvement de verrouillage de l'extrémité inférieure (10).

4. Rancher selon la revendication 1 ou 2 **caractérisé en ce que** l'extrémité supérieure déplaçable (2) le long de la structure linéaire supérieure longitudinale (4) solidaire de la carrosserie est immobilisable en un endroit quelconque le long de cette structure.

5. Rancher selon la revendication précédente **caractérisé en ce que** l'extrémité supérieure déplaçable (2) est immobilisable en un endroit quelconque le long de la structure, linéaire supérieure (4) par un moyen supérieur d'immobilisation en coopération avec le moyen inférieur d'immobilisation (11).

6. Rancher selon l'une quelconque des revendications précédentes **caractérisé en ce que** la structure de la partie intermédiaire rectiligne (5) du corps rectiligne (1) sert de guide à l'élément porteur mobile (7).

7. Rancher selon l'une quelconque des revendications 1 ou 2 **caractérisé en ce que** le moyen (6) de levage, d'abaissement et d'immobilisation de la charge se compose :
. de l'élément porteur mobile (7),
. de moyens de guidage de cet élément porteur mobile (7) le long du corps rectiligne (1),
. de moyens d'entraînement (17) de cet élément porteur mobile (7),
. d'une interface (8) reliée à l'élément porteur mobile (7),
. de moyens de verrouillage de l'élément porteur mobile (7) en position de soutien de la charge.

8. Rancher selon l'une quelconque des revendications précédentes **caractérisé en ce que** le corps rectiligne (1) est un corps creux profilé à deux flancs repliés formant deux glissières parallèles (21) et (22) pour le guidage à glissement d'un bloc de translation constituant l'élément porteur mobile (7).

9. Rancher selon l'une quelconque des revendications précédentes **caractérisé en ce que** le corps rectiligne (1) est suspendu à déplacement sur la structure linéaire supérieure longitudinale (4).

10. Rancher selon la revendication 7 **caractérisé en ce que** le moyen de levage, d'abaissement et de soutien (6) est à vis (18) entraînant un écrou porteur (19).

11. Rancher selon la revendication précédente **caractérisé en ce que** l'élément porteur mobile (7) est un bloc de translation (20) formant la cage de l'écrou de translation (19) dans laquelle l'écrou est monté flottant permettant un jeu fonctionnel entre la cage et l'écrou (19) monté sur la vis (18) du moyen de levage et d'abaissement (6).

12. Rancher selon la revendication 7 **caractérisé en ce que** le moyen de levage et d'abaissement (6) est un ensemble à chaîne moufflée (27) actionnant un bloc de translation (32) mobile verticalement le long de la partie intermédiaire rectiligne (5).

13. Rancher selon l'une des revendications 1 ou 2 **caractérisé en ce que** l'élément porteur mobile (7) est relié à un support porte-charge (9).

14. Rancher selon la revendication 7 **caractérisé en ce que** l'élément porteur mobile (7) est relié à un support porte-charge (9) faisant suite à l'interface (8).

15. Rancher selon la revendication 7 **caractérisé en ce que** l'élément porteur mobile (7) est relié directement à un support porte-charge (9).

16. Ensemble porteur formé de plusieurs ranchers selon l'une quelconque des revendications précédentes **caractérisé par** un support porte-charge (9) monté sur l'élément porteur mobile (7) de chacun des ranchers.

17. Ensemble porteur selon la revendication 16 **caractérisé en ce que** les ranchers sont disposés en vis-à-vis transversal.

18. Ensemble porteur selon la revendication précédente **caractérisé en ce que** les ranchers sont reliés fonctionnellement entre eux par une commande en synchronisation de mouvement.

19. Ensemble porteur selon la revendication 16 **caractérisé en ce que** le support porte-charge est monté articulé sur l'élément porteur mobile (7).

20. Ensemble porteur selon l'une quelconque des revendications précédentes de 16 à 19 **caractérisé en ce que** les ranchers sont disposés en vis-à-vis transversal et **en ce que** leurs éléments porteurs mobiles (7) sont réunis par une structure transversale porteuse (26) de la charge, structure qui est mobile le long de chacun des ranchers, commune aux deux ranchers et unique.

21. Ensemble porteur selon la revendication précédente **caractérisé en ce que** la structure transversale porteuse (26) se compose de deux traverses parallèles en forme de barres (51) et (52) maintenues à distance constante l'une de l'autre par une entretoise amovible (53) éventuellement réglable présente à chacune des extrémités de la structure porteuse (26).

22. Ensemble porteur selon la revendication précédente **caractérisé en ce que** la structure transversale (26) est la charge.

23. Ensemble porteur selon la revendication 21 **caractérisé en ce que** l'entretoise (53) est réalisée sous la forme d'une tige transversale aux traverses (51) et (52) à extrémités (54) et (55) coudées venant se loger dans des ouvertures à l'extrémité des traverses (51) et (52), **en ce que** les extrémités de ces traverses sont articulées chacune au bloc de translation (20) par deux biellettes plates (49) et (50) de faible épaisseur constituant l'interface (8) et **en ce qu'**un moyen de reprise des efforts transversaux est en outre prévu.

24. Ensemble porteur selon la revendication précédente **caractérisé en ce que** le moyen de reprise des efforts transversaux est un rouleau (56) monté à rotation autour de la tige de chaque entretoise (53) se déplaçant en appui de roulement contre la face avant des parties intermédiaires rectilignes (5) des corps rectilignes (1) des ranchers.

25. Ensemble porteur selon l'une quelconque des revendications précédentes de 16 à 24 **caractérisé en ce qu'**un même support porte-charge est porté par au moins deux ranchers.

26. Ensemble porteur selon la revendication précédente **caractérisé en ce que** le même support porte-charge est porté par deux ranchers.

27. Ensemble porteur selon l'une quelconque des revendications précédentes de 16 à 24 **caractérisé en ce que** les ranchers portent tous un même support porte-charge.

28. Ensemble porteur selon la revendication 16 **caractérisé en ce que** le support porte-charge (9) monté sur l'élément porteur mobile (7) de chacun des ranchers est individuel.

## Patentansprüche

1. Wagenrunge aus einem beweglichen geradlinigen Körper (1), welcher an seinem oberen Ende (2) mittels eines oberen Verlagerungsmittels (3) entlang einer oberen linearen Längsstruktur (4) geführt ist, die an der Karosserie oder dem Chassis eines Fahrzeugs angeordnet und mittels eines Feststellmittels in einer Position entlang dieser Karosserie oder dieses Chassis' festsetzbar ist, **dadurch gekennzeichnet, daß** das Feststellmittel (11) in Betriebsposition ein Feststellmittel an einer beliebigen oder vorbestimmten Stelle auf der gesamten Bewegungsbahn des geradlinigen Körpers (1) entlang dieser Karosserie oder dieses Chassis' ist, und daß der geradlinige Körper (1) der Runge ein Hub-, Senk- und Tragmittel (6) für die zu transportierende Last umfaßt, das von einer motorischen Kraft zum Verlagern eines beweglichen Tragelementes (7) angetrieben ist, welches entlang des geradlinigen Körpers (1) in Translation geführt und in einer beliebigen lasttragenden Position festsetzbar ist.

2. Runge nach Anspruch 1, **dadurch gekennzeichnet, daß** der das Hub- und Senkmittel (6) umfassende geradlinige Körper (1) aufweist:
- ein entlang der durch Verlagerungsmittel an der Karosserie festgelegten oberen linearen Längsstruktur (4) verlagerbares oberes Ende (2);
- einen geradlinigen Zwischenabschnitt (5), entlang dessen sich das bewegliche Tragelement (7) vertikal verlagert, und
- ein unteres Ende (10), welches das Feststellmittel (11) in einer beliebigen Position an einem Längsrand (12) an der unteren Karosserie oder dem Chassis aufweist.

3. Runge nach Anspruch 1 oder 2, **dadurch gekennzeichnet, daß** das verlagerbare obere Ende (2) entlang der oberen linearen Längsstruktur (4) durch Eingriff eines Riegels in eine Öffnung (45) nach einer Verriegelungsbewegung . des unteren Endes (10) festsetzbar ist.

4. Runge nach Anspruch 1 oder 2, **dadurch gekennzeichnet, daß** das entlang der an der Karosserie angeordneten oberen linearen Längsstruktur (4) verlagerbare obere Ende (2) an einer beliebigen Stelle entlang dieser Struktur festsetzbar ist.

5. Runge nach dem vorangehenden Anspruch, **dadurch gekennzeichnet, daß** das verlagerbare obere Ende (2) an einer beliebigen Stelle entlang der oberen linearen Längsstruktur (4) durch ein mit dem unteren Feststellmittel (11) zusammenwirkendes oberes Feststellmittel festsetzbar ist.

6. Runge nach einem der vorangehenden Ansprüche , **dadurch gekennzeichnet, daß** die Struktur des geradlinigen Zwischenabschnitts (5) des geradlinigen Körpers (1) als Führung für das bewegliche Tragelement (7) dient.

7. Runge nach einem der Ansprüche 1 oder 2, **dadurch gekennzeichnet, daß** das Hub-, Senk- und Feststellmittel (6) für die Last gebildet ist aus:
- dem beweglichen Tragelement (7);
- Führungsmitteln des entlang des geradlinigen Körpers (1) beweglichen Tragelements (7);
- Antriebsmitteln (17) für das bewegliche Tragelement (7);
- einem mit dem beweglichen Tragelement (7) verbundenen Zwischenglied (8) und
- Verriegelungsmitteln des beweglichen Tragelements (7) in der die Last tragenden Position.

8. Runge nach einem der vorangehenden Ansprüche, **dadurch gekennzeichnet, daß** der geradlinige Körper (1) ein profilierter Hohlkörper mit zwei abgebogenen Flanschen ist, welche zwei parallele Laufschienen (21, 22) zur Gleitführung einer von dem beweglichen Tragelement (7) gebildeten Translationseinheit bilden.

9. Runge nach einem der vorangehenden Ansprüche, **dadurch gekennzeichnet, daß** der geradlinige Körper (1) an der oberen linearen Längsstruktur (4) verschiebbar aufgehängt ist.

10. Runge nach Anspruch 7, **dadurch gekennzeichnet, daß** das Hub-, Senk- und Tragmittel (6) eine Spindel (18) ist, die eine Tragmutter (19) antreibt.

11. Runge nach einem der vorangehenden Ansprüche, **dadurch gekennzeichnet, daß** das bewegliche Tragelement (7) eine Translationseinheit (20) ist, welche einen Käfig der Tragmutter (19) bildet, in dem die Mutter unter Gewährleistung eines wirksamen Spiels zwischen dem Käfig und der auf der Spindel (18) des Hub- und Senkmittels (6) angeordneten Mutter lose angeordnet ist.

12. Runge nach Anspruch 7, **dadurch gekennzeichnet, daß** das Hub- und Senkmittel (6) eine Kettenflaschenzug-Einheit (27) ist, welche eine vertikal entlang dem geradlinigen Zwischenabschnitt (5) bewegliche Translationseinheit (32) antreibt.

13. Runge nach Anspruch 1 oder 2, **dadurch gekennzeichnet, daß** das bewegliche Tragelement (7) mit einem Lastenträger (9) verbunden ist.

14. Runge nach Anspruch 7, **dadurch gekennzeichnet, daß** das bewegliche Tragelement (7) mit einem an das Zwischenglied (8) anschließenden Lastenträger (9) verbunden ist.

15. Runge nach Anspruch 7, **dadurch gekennzeichnet, daß** das bewegliche Tragelement (7) unmittelbar mit einem Lastenträger (9) verbunden ist.

16. Trageinheit aus einer Mehrzahl von Rungen nach einem der vorangehenden Ansprüche, **gekennzeichnet durch** einen Lastenträger (9), welcher an dem beweglichen Tragelement (7) einer jeden Runge angeordnet ist.

17. Trageinheit nach Anspruch 16, **dadurch gekennzeichnet, daß** die Rungen transversal gegenüberliegend angeordnet sind.

18. Trageinheit nach dem vorangehenden Anspruch, **dadurch gekennzeichnet, daß** die Rungen durch eine Steuerung zur Synchronbewegung wirkverbunden sind.

19. Trageinheit nach Anspruch 16, **dadurch gekennzeichnet, daß** der Lastenträger schwenkbar an dem beweglichen Tragelement (7) angeordnet ist.

20. Trageinheit nach einem der vorangehenden Ansprüche 16 bis 19, **dadurch gekennzeichnet, daß** die Rungen transversal gegenüberliegend angeordnet sind und daß ihre beweglichen Tragelemente (7) durch eine lasttragende Querstruktur (26) verbunden sind, wobei die Struktur entlang jeder Runge der beiden einzelnen und gemeinsamen Rungen bewegbar ist.

21. Trageinheit nach dem vorangehenden Anspruch, **dadurch gekennzeichnet, daß** die tragende Querstruktur (26) von zwei Quertraversen in Form von Stangen (51, 52) gebildet ist, die von einer gegebenenfalls steuerbaren abnehmbaren Verbindung (53) auf Abstand gehalten sind, welche an jedem Ende der tragenden Struktur (26) vorgesehen ist.

22. Trageinheit nach dem vorangehenden Anspruch, **dadurch gekennzeichnet, daß** die Querstruktur (26) von der Last gebildet ist.

23. Trageinheit nach Anspruch 21, **dadurch gekennzeichnet, daß** die Verbindung (53) in Form einer Stange quer zu den Quertraversen (51, 52) mit zwei in Öffnungen am Ende der Quertraversen (51, 52) eingreifenden abgewinkelten Enden (54, 55) gebildet ist, daß die Enden der Quertraversen jeweils durch zwei flache Lenker (49, 50) geringer Dicke, die das Zwischenglied (8) bilden, an der Translationseinheit (20) gelagert sind und daß ferner Mittel zum Aufnehmen von Querkräften vorgesehen sind.

24. Trageinheit nach dem vorangehenden Anspruch, **dadurch gekennzeichnet, daß** das Mittel zum Aufnehmen von Querkräften eine auf der Querstange jeder Verbindung (53) drehbar angeordnete Walze (56) ist, welche unter Rollkontakt gegen die Stirnseite der geradlinigen Zwischenabschnitte (5) der geradlinigen Körper (1) der Rungen verschiebbar ist.

25. Trageinheit nach einem der vorangehenden Ansprüche 16 bis 24, **dadurch gekennzeichnet, daß** ein gemeinsamer Lastenträger von wenigstens zwei Rungen getragen ist.

26. Trageinheit nach dem vorangehenden Anspruch, **dadurch gekennzeichnet, daß** der gemeinsame Lastenträger von zwei Rungen getragen ist.

27. Trageinheit nach einem der vorangehenden Ansprüche 16 bis 24, **dadurch gekennzeichnet, daß** alle Rungen einen gleichen Lastenträger tragen.

28. Trageinheit nach Anspruch 16, **dadurch gekennzeichnet, daß** jeder Runge ein an dem beweglichen Tragelement (7) angeordneter individueller Lastenträger (9) zugeordnet ist.

## Claims

1. Stanchion for vehicle, formed by a rectilinear member (1) which is movable and which is guided at an upper end (2) thereof by an upper displacement means (3) along a longitudinal upper linear structure (4) which is integral with the body or the chassis of the vehicle and which can be immobilised by an immobilisation means in a position along the body or the chassis, **characterised in that** the immobilisation means (11) in the work position is an immobilisation means at any location or at a predetermined location over the entirety of the path of the rectilinear member (1) along the body or the chassis, and **in that** the rectilinear member (1) of the stanchion encloses a means (6) for raising, lowering and supporting the load to be transported, the means (6) being entrained by a moving force for the displacement of a movable carrier element (7) which is guided in translation along the rectilinear member (1) and which can be immobilised in any position in which it supports the load.

2. Stanchion according to claim 1, **characterised in that** the rectilinear member (1) which encloses the raising and lowering means (6) has:
- an upper end (2) which is displaceable along the longitudinal upper linear structure (4) which is mounted on the body by displacement means,
- a rectilinear intermediate portion (5), along which the movable carrier element (7) is displaced vertically,
- a lower end (10) which comprises the immobilisation means (11) at any position on a lower longitudinal border (12) of the body or the chassis.

3. Stanchion according to claim 1 or 2, **characterised in that** the displaceable upper end (2) can be immobilised along the longitudinal upper linear structure (4) by engagement of a pin in an opening (45) following the locking movement of the lower end (10).

4. Stanchion according to claim 1 or 2, **characterised in that** the upper end (2) which is displaceable along the longitudinal upper linear structure (4) which is integral with the body can be immobilised at any location along the structure.

5. Stanchion according to the preceding claim, **characterised in that** the displaceable upper end (2) can be immobilised at any location along the upper linear structure (4) by an upper immobilisation means in co-operation with the lower immobilisation means (11).

6. Stanchion according to any one of the preceding claims, **characterised in that** the structure of the rectilinear intermediate portion (5) of the rectilinear member (1) is used as a guide for the movable carrier element (7).

7. Stanchion according to either claim 1 or claim 2, **characterised in that** the means (6) for raising, lowering and immobilising the load comprises:
- the movable carrier element (7),
- means for guiding the movable carrier element (7) along the rectilinear member (1),
- means for entraining (17) the movable carrier element (7),
- an interface (8) which is connected to the movable carrier element (7),
- means for locking the movable carrier element (7) in a position for supporting the load.

8. Stanchion according to any one of the preceding claims, **characterised in that** the rectilinear member (1) is a profiled hollow member having two sides which are folded over forming two parallel slides (21) and (22) for slidingly guiding a translation unit which constitutes the movable carrier element (7).

9. Stanchion according to any one of the preceding claims, **characterised in that** the rectilinear member (1) is suspended for displacement on the longitudinal upper linear structure (4).

10. Stanchion according to claim 7, **characterised in that** the raising, lowering and supporting means (6) has a screw (18) entraining a carrier nut (19).

11. Stanchion according to the preceding claim, **characterised in that** the movable carrier element (7) is a translation unit (20) forming the case of the translation nut (19), in which the nut is mounted to float, allowing functional spacing between the case and the nut (19) which is mounted on the screw (18) of the raising and lowering means (6).

12. Stanchion according to claim 7, **characterised in that** the raising and lowering means (6) is a pulley-block chain assembly (27) which activates a translation unit (32) which is movable vertically along the rectilinear intermediate portion (5).

13. Stanchion according to either claim 1 or claim 2, **characterised in that** the movable carrier element (7) is connected to a load-carrying support (9).

14. Stanchion according to claim 7, **characterised in that** the movable carrier element (7) is connected to a load-carrying support (9) which follows the interface (8).

15. Stanchion according to claim 7, **characterised in that** the movable carrier element (7) is connected directly to a load-carrying support (9).

16. Carrier assembly formed by several stanchions according to any one of the preceding claims, **characterised by** a load-carrying support (9) which is mounted on the movable carrier element (7) of each of the stanchions.

17. Carrier assembly according to claim 16, **characterised in that** the stanchions are transversely opposed.

18. Carrier assembly according to the preceding claim, **characterised in that** the stanchions are operationally connected to each other by a movement synchronisation control.

19. Carrier assembly according to claim 16, **characterised in that** the load-carrying support is mounted articulated to the movable carrier element (7).

20. Carrier assembly according to any one of the preceding claims 16 to 19, **characterised in that** the stanchions are arranged in transverse opposition, and **in that** the movable carrier elements (7) thereof are connected by a transverse carrier structure (26) for the load, which structure can be moved along each of the stanchions, is common to the two stanchions and of which there is only one.

21. Carrier assembly according to the preceding claim, **characterised in that** the transverse carrier structure (26) comprises two parallel cross-pieces in the form of bars (51) and (52) which are maintained with constant spacing from each other by a movable strut (53) which is optionally adjustable and which is located at each of the ends of the carrier structure (26).

22. Carrier assembly according to the preceding claim, **characterised in that** the transverse structure (26) is the load.

23. Carrier assembly according to claim 21, **characterised in that** the strut (53) is produced in the form of a rod which is transverse to the cross-pieces (51) and (52) with bent ends (54) and (55) which are arranged in openings at the end of the cross-pieces (51) and (52), **in that** the ends of those cross-pieces are each articulated to the translation unit (20) by two flat rocker bars (49) and (50) of small thickness which constitute the interface (8), and **in that** there is further provided a means for receiving transverse forces.

24. Carrier assembly according to the preceding claim, **characterised in that** the means for receiving transverse forces is a cylinder (56) which is mounted for rotation about the rod of each strut (53) and which is displaced with rolling contact against the front face of the rectilinear intermediate portions (5) of the rectilinear members (1) of the stanchions.

25. Carrier assembly according to any one of the preceding claims 16 to 24, **characterised in that** the same load-carrying support is carried by at least two stanchions.

26. Carrier assembly according to the preceding claim, **characterised in that** the same load-carrying support is carried by two stanchions.

27. Carrier assembly according to any one of the preceding claims 16 to 24, **characterised in that** the stanchions all carry the same load-carrying support.

28. Carrier assembly according to claim 16, **characterised in that** the load-carrying support (9) which is mounted on the movable carrier element (7) of each of the stanchions is individual.
